# EUROPÄISCHE PATENTANMELDUNG

(11) **EP 0 832 614 A1**
(43) Veröffentlichungstag der Anmeldung: **01.04.1998**
(21) Anmeldenummer: 96810632.8
(22) Anmeldetag: 25.09.1996
(51) Int. Cl.: A61C 3/06, B24D 13/14, B24D 13/20

(54) **Schleifscheibe für zahnärztliche Anwendung**

(71) Anmelder: HAWE NEOS DENTAL Dr. H. V. WEISSENFLUH AG, 6934 Bioggio (CH)
(72) Erfinder: Von Weissenfluh, Beat A., 6925 Gentilino (CH); Gozzi, Guido, Dr., 8305 Dietlikon (CH); Von Weissenfluh, Hans, 6573 Magadino (CH)
(74) Vertreter: AMMANN PATENTANWAELTE AG BERN

(57) **Zusammenfassung**

Die Schleifscheibe für zahnärztliche Verwendung besteht aus einer mit abrasivem Material beschichteten Kunststoff-Folie, die bombiert ist. Der Krümmungsradius der Schleifscheibe (1, 11) liegt in einem Bereich zwischen 8 und 20 mm. In einem bevorzugten Ausführungsbeispiel sind die Dicke der Scheibe und deren Material derart ausgewählt, dass die Bombierung umkehrbar ist, so dass die konkave Seite zur konvexen Seite werden kann, und umgekehrt.

Eine bombierte Schleifscheibe gewährleistet eine weitaus bessere und gründlichere Bearbeitung von unregelmässigen und gekrümmten Zahnflächen als ebene Schleifscheiben.

## Beschreibung

Es sind eine Vielzahl von Schleifscheiben für zahnärztliche Anwendungen bekannt, so z. B. aus der EP-B-0 044 701 oder EP-B-0 270 556, wobei beide Schleifscheiben eben sind. Ausserdem ist bei den Schleifscheiben gemäss diesen beiden Patentschriften wichtig, dass im Zentrum eine Scheibennabe angeordnet ist, die geformt ist, das Ende einer Antriebsspindel aufzunehmen.

Solche ebene Schleifscheiben haben sich zwar bewährt, doch hat es sich herausgestellt, dass sie nicht für alle Anwendungen gleich gut geeignet sind, da sowohl die Zahnoberflächen als auch Zahnlücken nicht regelmässig geformt sind oder parallel zueinander liegende Begrenzungen aufweisen.

Aus der DE-U-92 11 765 ist ausserdem eine Vorrichtung zum Polieren von Zahnfüllungen und natürlichen Zähnen bekannt, die einen linsenförmigen, elastischen Polierkörper aufweist. Solche Polierkörper können nur für die Bearbeitung von Zahnoberflächen verwendet werden, jedoch nicht für das Abschleifen von Zahnzwischenräumen.

Es ist von diesem Stand der Technik ausgehend Aufgabe der vorliegenden Erfindung, eine Schleifscheibe anzugeben, die eine wirkungsvollere Bearbeitung von Zahnoberflächen und Zahnlücken ermöglicht. Eine solche Schleifscheibe ist in Patentanspruch 1 definiert.

Die Erfindung wird im folgenden anhand einer Zeichnung eines Ausführungsbeispiels näher erläutert.
- Figur 1: zeigt eine erfindungsgemässe Schleifscheibe,
- Figur 2: zeigt einen Schnitt gemäss der Linie II-II in Figur 1,
- Figur 3: zeigt ein Ende einer Antriebsspindel,
- Figur 4: zeigt die Spindel von Figur 3 von vorne, und
- Figur 5: zeigt die auf die Spindel von Figur 3 aufgesteckte Schleifscheibe von Figur 1.

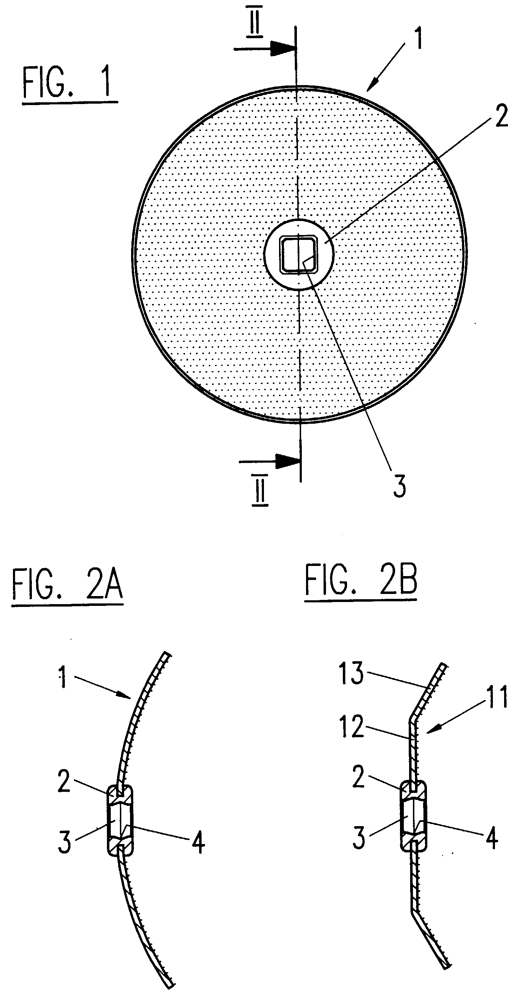

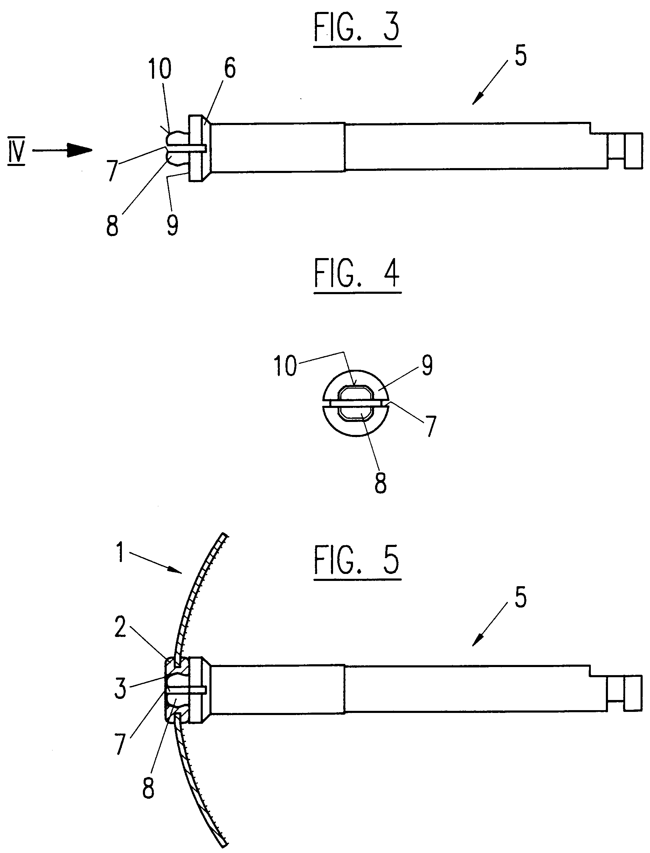

Die Schleifscheibe 1 weist eine Nabe 2 auf, die eine Nabenöffnung 3 aufweist, die beispielsweise quadratisch ist, während deren Querschnitt aus Figur 2 ersichtlich ist und zur Mitte hin einen grösseren Durchmesser aufweist als an den Oberflächen. Dadurch erhält jede Nabenöffnungsseite 3 einen leicht V-förmigen Querschnitt, wodurch, im Zusammenspiel mit einem entsprechend geformten Spindelende (siehe Figuren 3 und 4) eine besonders sichere Befestigung der Schleifscheibe auf der Drehspindel möglich ist. Dabei ist in vorliegendem Beispiel die Dicke der Nabe mit dem Ende der Drehspindel derart abgestimmt, dass die Drehspindel nicht über die Nabenoberfläche hinausragt, sondern vorteilhafterweise etwas innerhalb endet.

Das Besondere an dieser Schleifscheibe 1 ist, dass sie nicht eben sondern bombiert ist, wobei die abrasive Beschichtung entweder auf der konkaven oder auf der konvexen Seite angebracht sein kann oder auf beiden Seiten, gegebenenfalls mit abrasiven Körnern mit verschiedenen Durchmessern.

In vorliegendem Ausführungsbeispiel gemäss Figur 2A beträgt der Radius der stetigen Bombierung von Schleifscheibe 1 ungefähr 14 mm, doch ist die Wölbung nicht auf diesen Wert beschränkt und kann innerhalb eines Bereiches von 8 bis 20 mm liegen.

Im Ausführungsbeispiel gemäss Figur 2B ist die Bombierung der Schleifscheibe 11 nicht stetig. Dem etwa ebenen Teil 12 im Zentrum schliesst sich ein abgeknickter Teil 13 an, wobei der Bombierungradius dieser Scheibe die gleichen Werte wie für das vorangehende Beispiel aufweisen kann.

Die Scheiben können beispielsweise eine Dicke von 0,05 bis 0,5 mm und einen Durchmesser von 8 bis 20 mm aufweisen. Die Nabenöffnung kann beispielsweise eine Kantenlänge von 1,55 mm aufweisen, während die Nabendicke 1,1 mm betragen kann. Als Material kann eine relativ steife Folie aus Polyester verwendet werden, wodurch es möglich ist, die Schleifscheibe durchzubiegen, derart, dass die vorher konkave Seite konvex wird und umgekehrt. Dadurch ist es möglich, die Schleifscheibe stets den Gegebenheiten anzupassen, d. h. derart zu richten, dass die unebenen Teile der Zähne besser poliert werden können und mit der gleichen Schleifscheibe verschieden liegende Ränder, Unebenheiten und dergleichen bearbeitet werden können, ohne sie auswechseln zu müssen.

Eine mit vorliegender Schleifscheibe verwendbare Spindel 5 ist in den Figuren 3 und 4 dargestellt. Das Ende der Spindel 5 ist mit einem Zwingenkopf 6 versehen, der beispielsweise einen Querschlitz 7 aufweist, um die notwendige Federung der Zwinge 8 zu gewährleisten. Der Zwingenkopf 6 weist eine Auflagefläche 9 für die Nabe 2 der Schleifscheibe auf, der sich die der Öffnung 3 der Scheibennabe angepasste Zwinge 8 anschliesst, die u. a. einen umlaufenden, der V-Form der Innenseite angepassten Wulst 10 aufweist. Wie gut aus Figur 5 hervorgeht, sind die Zwinge und die Scheibennabe derart aufeinander abgestimmt, dass sich das eingesteckte Zwingenende etwa bündig mit, oder vorteilhafterweise eher innerhalb, der Aussenfläche der Scheibennabe befindet.

Vorzugsweise wird auch die Spindel aus einem geeigneten Kunststoff hergestellt, wodurch sich einerseits eine kleine Masse und andererseits eine besonders gute und formschlüssige Kraftübertragung ergibt.

Die in den Figuren dargestellte Befestigungsart mit einer Nabe mit quadratischer Öffnung ist nur beispielhaft und ist durch den Verkauf einer grossen Anzahl von ebenen Schleifscheiben mit solcher Befestigungsart an sich bekannt. Das Wesen der Erfindung, die Wölbung der Schleifscheibe, kann jedoch auch mittels Schleifscheiben mit anderer Befestigungsart, bzw. mit anderen Haben oder auch nabenlos und mit verschiedenen Öffnungen realisiert werden, wobei selbstverständlich das Spindelende an die jeweilige Befestigungsart, bzw. Befestigungsöffnung, angepasst werden muss.

## Patentansprüche

1. Schleifscheibe für zahnärztliche Verwendung, bestehend aus einer mit abrasivem Material beschichteten Kunststoff-Folie, dadurch gekennzeichnet, dass sie bombiert ist.

2. Schleifscheibe nach Anspruch 1, dadurch gekennzeichnet, dass die Scheibe (1) eine stetige Bombierung oder dass die Scheibe (11) im Zentrum ein ebenes Teil (12) mit einem anschliessenden geknickten Teil (13) aufweist.

3. Schleifscheibe nach Anspruch 1 oder 2, dadurch gekennzeichnet, dass die Dicke der Scheibe (1, 11) und deren Material derart ausgewählt sind, dass die Bombierung umkehrbar ist, so dass die konkave Seite zur konvexen Seite werden kann, und umgekehrt.

4. Schleifscheibe nach einem der Ansprüche 1 bis 3, dadurch gekennzeichnet, dass der Krümmungsradius in einem Bereich zwischen 8 und 20 mm liegt.

5. Schleifscheibe nach einem der Ansprüche 1 bis 5, dadurch gekennzeichnet, dass sie eine Kunststoff-Nabe (2) mit rechteckiger Oeffnung (3) mit Innenseiten (4) aufweist, deren Querschnitt sich zur Mitte hin V-förmig verbreitert.

6. Verwendung der Schleifscheibe nach Anspruch 5 mit einer Spindel (5) mit Spindelkopf (6), dessen Zwinge (7) zweigeteilt ist und eine der Nabenöffnung (3, 4) der Nabe (2) angepasste Aussenform mit umlaufenden Wulst (10) aufweist, wobei die Spindel aus geeigneten Kunststoff gefertigt ist.
